# EUROPEAN PATENT APPLICATION

(11) **EP 0 570 962 A1**
(43) Date of publication of application: **24.11.1993**
(21) Application number: 93108211.9
(22) Date of filing: 19.05.1993
(51) Int. Cl.: B21D 43/22, B21B 39/00

(54) **Work table for a punching machine**

(30) Priority: 20.05.1992 IT BO920186
(71) Applicant: RAINER S.r.l., I-40012 Calderara di Reno (IT)
(72) Inventor: Raimondi Stefano, I-40133 Bologna (IT); Sarti Antonio, I-40132 Bologna (IT)
(74) Representative: Jorio, Paolo

(57) **Abstract**

A work table (4) for a punching machine (1) comprising a punching station (2) for a metal sheet (3), and a carriage (5) for feeding the sheet (3) on to the work table (4). The present invention is mainly characterized by the fact that the work table (4) comprises a sheet supporting surface having a number of rollers (42) rotating about a respective horizontal axis, and each presenting externally a number of bristle assemblies (43) extending radially outwards.

## Description

The present invention relates to a work table for a punching machine.

On punching machines, the work table is positioned horizontally between the punching station and work feed carriage, and should provide for sliding the metal sheet to and from the punching station with as little friction as possible. To achieve this, the work table presents semispherical metal bosses on which the sheet rests, and, on some machines, also presents a hatch closed by a horizontal laterally-hinged plate rotatable downwards. In the downward-sloping position, the plate defines a sloping surface along which, in use, the sheet metal parts slide by force of gravity on to an endless belt located beneath the work table and which provides for removing the parts off the machine. The plate is also provided with semispherical bosses for reducing friction between itself and the part.

Work tables of the aforementioned type present several drawbacks, foremost of which is the noise produced by the metal sheet and part sliding over the bosses on the work table. Moreover, they also fail to provide for troublefree transfer of the part along the sloping surface defined by the plate.

It is an object of the present invention to provide a work table for a punching machine, designed to overcome the aforementioned drawbacks.

According to the present invention, there is provided a work table for a punching machine comprising a punching station for a metal sheet, and a carriage for feeding the sheet on to the work table; said work table comprising a sheet supporting surface having a number of first rollers rotating about a respective horizontal axis and each presenting externally a number of first bristle assemblies extending radially outwards.

A preferred non-limiting embodiment of the present invention will be described by way of example with reference to the accompanying drawings, in which:

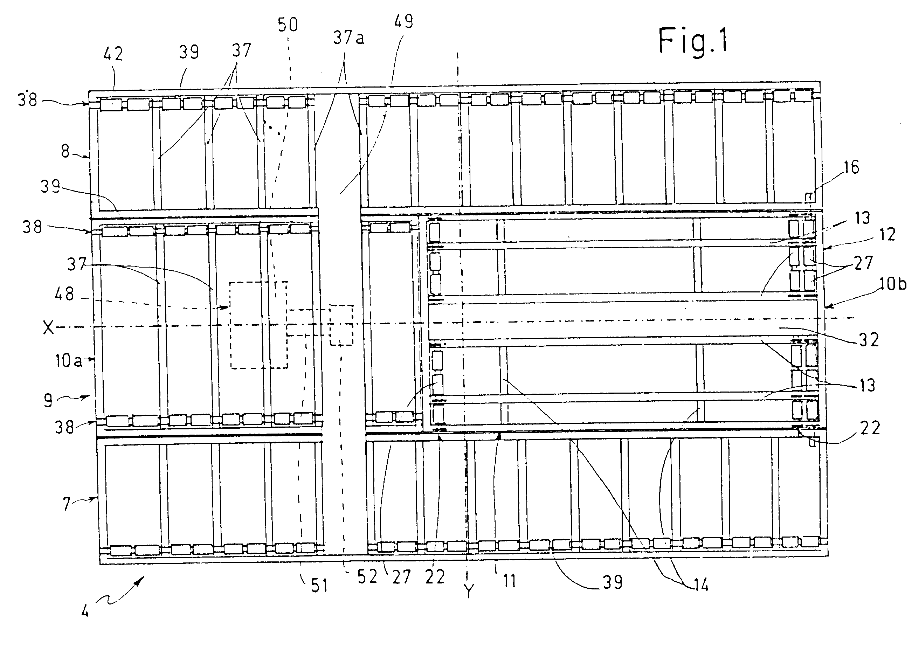

Fig.1 shows a plan view of a punching machine work table in accordance with the teachings of the present invention;
Fig.2 shows a side view of the Fig.1 work table with part of it in two different operating positions;

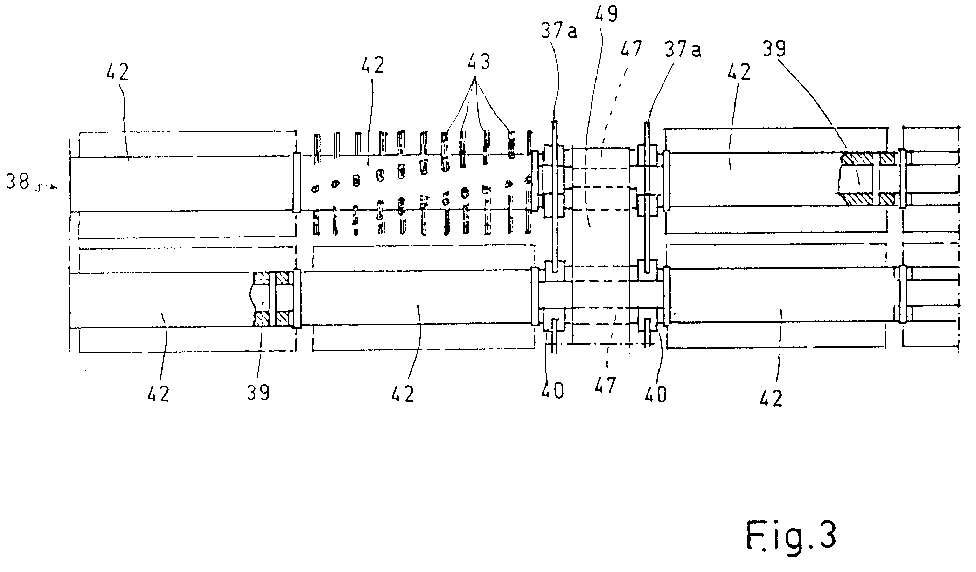

Fig.3 shows a partially sectioned view of a detail in Fig.1.

With reference to Fig.s 1 and 2, number 1 indicates a punching machine comprising a punching station 2 for a metal sheet 3; a horizontal work table 4 on which sheet 3 is supported; and a carriage 5 with grips 6 for moving sheet 3 on work table 4 along two horizontal perpendicular axes X and Y, and for loading and unloading sheet 3 on and off table 4. In particular, the X axis connects carriage 5 to station 2.

Table 4 is substantially rectangular, and comprises two lateral portions 7 and 8 and a central portion 9, all rectangular in shape, coplanar with one another, and of the same length along the X axis. Portion 9 is divided parallel to the Y axis into a first portion 10a supported by and integral with portions 7 and 8; and a second portion 10b close to station 2 and mounted so as to move in relation to table 4. More specifically, portion 10b is defined by a hatch device 11 comprising a frame structure 12 consisting of a number of side members 13 parallel to the X axis and connected by a number of cross members 14 parallel to the Y axis. Along one of the short sides parallel to the Y axis and close to station 2, structure 12 is hinged so as to rotate about said short side between a first and second operating position and by virtue of a known actuator 15. Along said short side of structure 12, the respective ends of side members 13 are fitted with a hinge pin 16, the axial ends of which are supported on portions 7 and 8 of table 4.

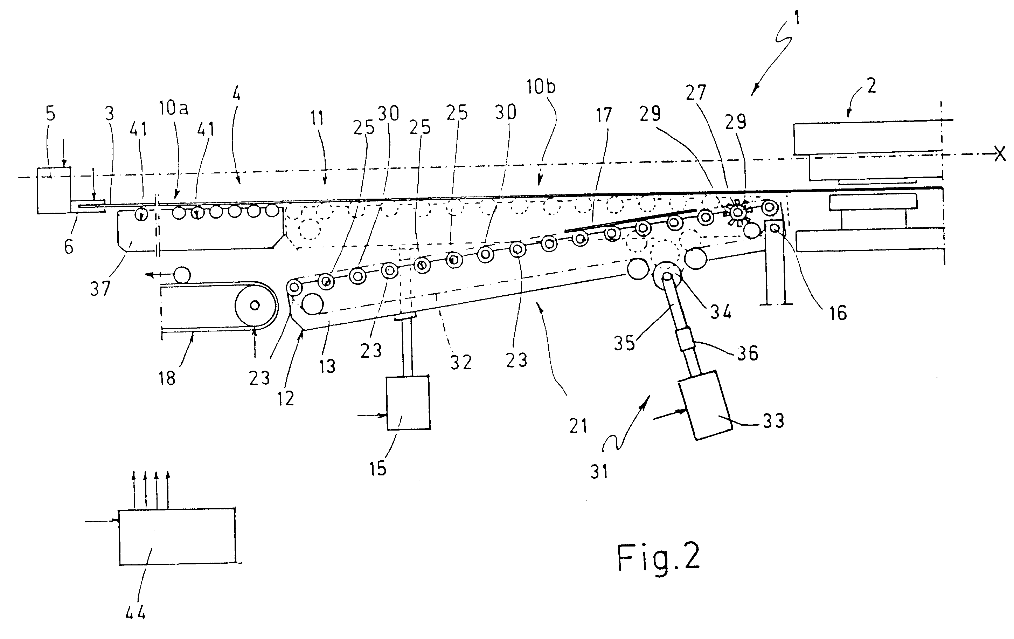

As shown in Fig.2, in the first operating position, structure 12 presents its upper surface substantially coplanar with the upper surfaces of portions 7 and 8, so as to support part 17 of sheet 3 coming off station 2; and, in the second operating position, structure 12 is inclined downwards, so as to enable part 17 to be fed beneath portion 10a and on to a powered endless belt type device 18 located parallel to and beneath portion 10a, and which provides for removing part 17 from machine 1.

With reference to Fig.s 1 and 3, portions 7 and 8 and portion 10a of portion 9 are each defined by a plate (not shown) and by a number of side members 37 supported on the plate (not shown), similar to side members 13 but arranged parallel to the Y axis. Each portion 7, 8 and portion 10a of portion 9 present a number of sheet feed units 38, each comprising a shaft 39 and annular elements 40 supporting shaft 39 and equal in number to side members 37. Each shaft 39 extends perpendicular to side members 37 by which it is supported via annular elements 40. In particular, each annular element 40 presents, along its outer periphery, an annular groove housed in a respective semicircular recess 41 (Fig. 2) on top of each side member 37.

Each unit 38 also presents a number of rollers 42 fitted through coaxially with respective shaft 39 and connected integral with the same by means of pins. Shafts 39 of units 38 are arranged parallel to one another and distributed evenly along the Y axis. Externally, each roller 42 presents a number of bristle assemblies 43 extending radially outwards and arranged on the outer surface of roller 42 in neat, slightly helical, longitudinal rows. Each portion 7, 8 and 10a presents two side members 37a arranged close together, those of portion 10a being in line with those of portions 7 and 8, and, between side members 37a, each shaft 39 is fitted with a toothed pulley 47. Finally, work table 4 presents a drive unit 48 for powering feed units 38. Drive unit 48 comprises a toothed drive belt 49 meshing with all the pulleys 47 of units 38; and a motor 50, the output shaft 51 of which rotates a toothed pulley 52 meshing with belt 49 which thus provides for transmitting motion to all of shafts 39.

With reference to Fig. 2, device 11 also comprises a transfer unit 21 for feeding part 17 to device 18 and in turn comprising a number of roller type feed units 22 similar to units 38. Each unit 22 comprises a shaft 23 and annular elements 24 supporting shaft 23 and equal in number to side members 13. Each shaft 23 extends perpendicular to side members 13 by which it is supported via annular elements 24. In particular, each annular element 24 presents, along its outer periphery, an annular groove housed in a respective semicircular recess 25 on top of each side member 13.

Each unit 22 also presents a number of rollers 27 fitted through coaxially with respective shaft 23 and connected integral with the same by means of pins (not shown). Shafts 23 of units 22 are arranged parallel to one another and distributed evenly along the X axis. Externally, each roller 27 presents a number of bristle assembles 29 extending radially outwards and, like assemblies 43, arranged over the outer surface of roller 27 in neat, slightly helical, longitudinal rows.

Structure 12 presents two central side members 13 arranged close together and between which each shaft 23 is fitted with a toothed pulley 30. Finally, device 11 comprises a drive unit 31 for powering the feed units. Drive unit 31 comprises a toothed drive belt 32 meshing with all the pulleys 30 of units 22; and a motor 33 mounted (in a manner not shown) integral with a fixed part (not shown). Belt 32 also meshes with a toothed pulley 34 located beneath structure 12 and fitted to a hub 35. Unit 31 also comprises a clutch 36 located between the output shaft of motor 33 and hub 35, and which provides for transmitting motion from the shaft of motor 33 to hub 35 when the structure is set to said second operating position.

As shown in Fig.2, machine 1 presents an electronic control system 44 for controlling the punching process and operation of carriage 5, grips 6, actuator 15, motor 33, device 18 and motor 50. Along device 18, a sensor 45 is provided for detecting the passage of part 17.

In actual use, carriage 5 loads sheet 3 on to table 4, and feeds it along axes X and Y so as to successively feed portions of sheet 3 into station 2. If the punching operation results in the formation of a large-sized part 17, this is released on to rollers 27 of structure 12; actuator 15 is operated to move structure 12 into the second operating position; in the second operating position, hub 35 angularly engages the output shaft of motor 33; control system 44 activates motor 33 so as to rotate shafts 23 and, consequently, rollers 27, which transfer part 17 to device 18; device 18 is activated to remove part 17 from machine 1; and, once part 17 is removed, the actuator is again operated to restore structure 12 to the first operating position.

Upon completion of the punching operation, sheet 3 is released by carriage 5, which then proceeds to pick up a further sheet 3, normally off a stack. While the second sheet 3 is being picked up by carriage 5, the punched sheet 3 is unloaded off machine 1 and towards a lateral edge of table 4 by simply activating motor 50, which provides for rotating rollers 42, the bristle assemblies 43 of which feed the punched sheet 3 in a direction substantially parallel to the Y axis.

The advantages of the present invention will be clear from the foregoing description.

In particular, by virtue of the sheet supporting surface of table 4 being defined by bristle assemblies 29 and 43, the noise produced by sheet 3 sliding over table 4 is considerably reduced as compared with known tables. Moreover, sheet 3 is unloaded off table 4 by groups 38, thus relieving carriage 5 of the unloading operation and so enabling it to immediately load the next sheet 3. This therefore provides for simplifying and accelerating loading and unloading of the sheets, and so improving performance and output of the machine 1 as compared with known machines. Finally, removal of large-sized parts 17 off machine 1 is guaranteed.

To those skilled in the art it will be clear that changes may be made to the work table as described and illustrated herein without, however, departing from the scope of the present invention.

According to a first variation not shown, structure 12 presents rollers 27 mounted on idle shafts 23, and is powered so as to vibrate in said second operating position. To transfer parts 17 to device 18, therefore, structure 12 is first set to the second operating position and then vibrated.

According to a second variation not shown, for each feed unit defined in both portion 10b and elsewhere on table 4, the bristle assemblies 29, 43 of each roller 27, 42 are arranged in neat longitudinal rows with an opposite helical arrangement to that of bristle assemblies 29, 43 of the adjacent roller 27, 42, so that the thrust exerted by each feed unit 22 is parallel to the X axis, and that exerted by each feed unit 38 is parallel to the Y axis.

## Claims

1. A work table for a punching machine (1) comprising a punching station (2) for a metal sheet (3), and a carriage (5) for feeding the sheet (3) on to the work table; said work table comprising a sheet supporting surface having a number of first rollers (42) rotating about a respective horizontal axis and each presenting externally a number of first bristle assemblies (43) extending radially outwards.

2. A work table as claimed in Claim 1, characterized by the fact that said first bristle assemblies (43) are arranged on the outer surface of said respective first roller (42) in neat, longitudinal, helical rows.

3. A work table as claimed in Claim 1 and/or 2, characterized by the fact that, on said sheet supporting surface, it comprises a number of first sheet feed units (38); each said first unit (38) comprising a first shaft (39) rotating about a horizontal axis, and a number of said first rollers (42) fitted through coaxially with said respective first shaft (39); said first shafts (39) being parallel to one another.

4. A work table as claimed in Claim 3, characterized by the fact that it comprises a first drive unit (48) for powering said first feed units (38), for unloading said sheet (3) off said supporting surface upon completion of the punching operations; said first drive unit (48) rotating said first shafts (39), and said first rollers (42) being angularly integral with said respective first shaft (39).

5. A work table as claimed in Claim 4, characterized by the fact that each said first shaft (39) is fitted with a respective first toothed pulley (47); and by the fact that said first drive unit (48) comprises a first toothed drive belt (49) meshing with all said first pulleys (47); and a first motor (50), the output shaft (51) of which rotates a second toothed pulley (52) meshing with said first belt (49) which thus provides for transmitting motion to all said first shafts (39).

6. A work table as claimed in at least one of the foregoing Claims from 3 to 5, characterized by the fact that it comprises a first larger portion (7, 8, 10a) featuring said first feed units (38); and a second smaller portion (10b) located close to said punching station (2) and defined by a a hatch type device (11) comprising a structure (12) hinged on one side and rotated by an actuator (15) between a first and second operating position; said structure (12), in said first operating position, presenting its upper surface substantially coplanar with said supporting surface, so as to support the part (17) of said sheet (3) leaving said punching station (2); and, in said second operating position, said structure (12) being tilted downwards to enable said part (17) to be fed beneath said supporting surface and on to a powered endless belt type device (18) for removing said part (17) from said machine (1).

7. A work table as claimed in Claim 6, characterized by the fact that said upper surface of said structure (12) comprises a number of second feed units (22) for said part (17); each said second unit (22) comprising a second shaft (23) rotating about a horizontal axis; and a number of second rollers (27) fitted through coaxially with said respective second shaft (23); said second shafts (23) being arranged parallel to one another; and said second rollers (27) presenting, externally, a number of second bristle assemblies (29) extending radially outwards.

8. A work table as claimed in Claim 7, characterized by the fact that it comprises a second drive unit (31) for powering said second feed units (22), for unloading said part (17) on to said powered device (18); said second drive unit (31) rotating said second shafts (23), and said second rollers (27) being angularly integral with said respective second shaft (23).

9. A work table as claimed in Claim 8, characterized by the fact that each said second shaft (23) is fitted with a respective third toothed pulley (30); and by the fact that said second drive unit (31) comprises a second toothed drive belt (32) meshing with all said third pulleys (30); and a second motor (33), the output shaft of which rotates a fourth toothed pulley (34) meshing with said second belt (32) which thus provides for transmitting motion to all said second shafts (23).

10. A work table as claimed in the foregoing Claims, characterized by the fact that it comprises an electronic control system (44) for controlling the punching process and operation of said carriage (5), said actuator (15), said motors (50, 33) and said powered device (18).
